# EUROPÄISCHE PATENTANMELDUNG

(11) **EP 2 034 354 A1**
(43) Veröffentlichungstag der Anmeldung: **11.03.2009**
(21) Anmeldenummer: 07115929.7
(22) Anmeldetag: 07.09.2007
(51) Int. Cl.: G02C 5/00

(54) **Personalisierbare, modulare Brillenfassung**

(71) Anmelder: Vögele, Ivan, 5306 Tegerfelden (CH)
(72) Erfinder: Vögele, Ivan, 5306 Tegerfelden (CH)
(74) Vertreter: BOVARD AG

(57) **Zusammenfassung**

Diese Erfindung bezieht sich auf eine personalisierbare, modulare Brillenfassung (1) umfassend mindestens eine Vorderschicht (2) und eine Hinterschicht (5), zwischen welchen Brillengläser (3a, 3b) platzierbar sind, sowie zwei an der Vorderschicht (2) lösbar befestigte Bügel (6a, 6b), bei welcher an der Vorderschicht (2) mindestens eine Klemmanordnung (2a, 2b) und an der Hinterschicht (5) mindestens ein entsprechendes Stützelement (9a, 9b) vorgesehen sind, welche im Tragezustand derart ineinander greifen, dass die Vorderschicht (2) und die Hinterschicht (5) miteinander verbindbar, und die Brillengläser (3a, 3b) zwischen der Vorderschicht (2) und der Hinterschicht (5) festklemmbar sind.

## Beschreibung

Diese Erfindung betrifft eine personalisierbare, modulare Brillenfassung, umfassend mindestens eine Vorderschicht und eine Hinterschicht, zwischen welchen Brillengläser platzierbar sind, sowie zwei an der Vorderschicht lösbar befestigte Bügel.

Es sind bereits Brillenfassungen bekannt, bei welchen die Form konstant bleibt, während die Farbe variiert, so dass sie nach dem Geschmack des Benutzers gewählt werden kann. Auf der anderen Seite sind auch Brillenfassungen bekannt, welche dasselbe Grundgestell haben, wobei die Oberfläche in der Grösse oder Form frei gewählt werden kann. Allerdings ist die Montage von Brillen mit solchen Brillenfassungen relativ kompliziert und muss in der Regel durch einen Spezialisten durchgeführt werden. Zudem kann die Brille, bzw. ihr Aussehen nicht so einfach verändert und angepasst werden.

Somit besteht für diese Erfindung die Aufgabe, eine Brillenfassung vorzuschlagen, welche sich durch eine sehr einfache Montage, und eine sehr einfache Personalisierbarkeit auszeichnet. Insbesondere sollte eine Brillenfassung suggeriert werden, deren Farbe, Grösse oder aber das Erscheinungsbild durch wenige Griffe und Hilfe von Spezialisten den individuellen Wünschen und Bedürfnissen des Benutzers angepasst werden kann, wobei jederzeit gewährleistet bleibt, dass die verwendeten Brillengläser korrekt sind und bei diesen Anpassungsmanipulationen nicht beschädigt werden.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.

Insbesondere werden die Ziele der Erfindung dadurch gelöst, dass bei einer personalisierbaren, modularen Brillenfassung, umfassend mindestens eine Vorderschicht und eine Hinterschicht, zwischen welchen Brillengläser platzierbar sind, sowie zwei an der Vorderschicht lösbar befestigte Bügel, an der Vorderschicht mindestens eine Klemmanordnung und an der Hinterschicht mindestens ein entsprechendes Stützelement vorgesehen sind, welche im stabilen Zustand derart ineinander greifen, dass die Vorderschicht und die Hinterschicht miteinander verbindbar, und die Brillengläser zwischen der Vorderschicht und der Hinterschicht festklemmbar sind. Der Vorteil dieser Erfindung liegt insbesondere darin, dass die Brillenfassung sehr einfach personalisierbar ist, da sie aus verschiedenen Einzelelementen bzw. Modulen aufgebaut ist, welche nach Belieben kombiniert werden können. Ausserdem ist die Montage einer Brille mit einer solchen Brillenfassung (d.h. die Einpassung der Brillengläser in die Brillenfassung selbst) wesentlich einfacher als die Montage einer herkömmlichen Brille. In diesem Sinne kann die Montage, aber auch die Demontage und Austausch einzelner Teile auch direkt durch den Benutzer durchgeführt werden. Der modulare Aufbau ermöglicht ausserdem auch, dass bei einer Beschädigung oder dem Bruch eines Teils lediglich das beschädigte Teil ersetzt werden muss, wodurch nicht die Kosten für eine komplette Brillenfassung anfallen.

In einer Ausführungsvariante umfassen die Vorderschicht mindestens ein erstes Befestigungselement und die Hinterschicht mindestens ein zweites komplementäres Befestigungselement derart, dass die Verbindung zwischen der Vorderschicht und der Hinterschicht im stabilen Zustand verstärkbar ist. Der Vorteil dieser Ausführungsvariante liegt insbesondere darin, dass die Verbindung zwischen den einzelnen Schichten verstärkt wird, was zu einer höheren Stabilität und einem besseren Tragekomfort führt.

In einer anderen Ausführungsvariante weist das mindestens eine erste Befestigungselement die Form einer Noppe, und das mindestens eine zweite Befestigungselement die Form einer mit der Noppe komplementären Öffnung auf. Diese Ausführungsvariante hat unter anderem den Vorteil, dass die Befestigungselemente durch wohl bekannte Methoden hergestellt werden können. Ausserdem ist eine Verbindung zwischen einem noppenartigen Element und der entsprechenden Öffnung einerseits sehr resistent, aber andererseits auch sehr einfach herstellbar bzw. entfernbar, wodurch die Personalisierung der Brillenfassung noch weiter vereinfacht wird.

In einer weiteren Ausführungsvariante ist mindestens eine Zwischenschicht mit Öffnungen zur Aufnahme der Brillengläser vorgesehen, welche mindestens ein drittes Befestigungselement derart umfasst, dass die Zwischenschicht im stabilen Zustand zwischen der Vorderschicht und der Hinterschicht festklemmbar und mit der Vorderschicht und der Hinterschicht verbindbar ist. Der Vorteil dieser Ausführungsvariante liegt vor allem darin, dass die Brillengläser fest in der Zwischenschicht eingepasst werden können, so dass die Personalisierung der Brillenfassung einerseits noch einfacher durchgeführt werden kann, und andererseits keine Fehler beim Einpassen von Brillengläsern zustande kommen können, welche dann die Sicht des Benutzers beeinträchtigen könnten. Insbesondere können in diesem Zusammenhang beispielsweise sowohl die Vorder- als auch die Hinterschicht der Brillenfassung ausgetauscht werden, während die Brillengläser in der Zwischenschicht fest eingepasst bleiben. Dadurch werden an den Brillengläsern keinerlei Anpassungen notwendig, da sie bereits einmal korrekt ausgerichtet sind.

In einer anderen Ausführungsvariante ist die mindestens eine Klemmanordnung derart aus einem elastischen Material hergestellt, dass das Festklemmen der Brillengläser durch die Kraftanwendung auf die mindestens eine Klemmanordnung lösbar ist. Insbesondere kann dies geschehen, indem beispielsweise die Klemmanordnung durch eine direkte laterale Kraftanwendung von innen gegen aussen verbogen wird, so dass die Stützelemente von der Klemmanordnung gelöst werden. Der Vorteil dieser Ausführungsvariante liegt insbesondere darin, dass kein spezieles Werkzeug notwendig ist, um die Brillenfassung in ihre Bestandteile zu zerlegen, um anschliessend das eine oder das andere Element zu ersetzen, und so die Brillenfassung zu personalisieren.

In einer wieder anderen Ausführungsvariante ist mindestens die Vorderschicht aus Kunststoff hergestellt. Diese Ausführungsvariante hat unter anderem den Vorteil, dass die Brillenfassung aus einem geeigneten Material hergestellt werden kann. Kunststoff ist nicht nur sehr wenig gewichtig und pflegeleicht, sondern eignet sich dank seinen elastischen Eigenschaften auch sehr gut für die vorliegende Erfindung.

In einer weiteren Ausführungsvariante sind mindestens zwei verschiedene, austauschbare Vorderschichten vorgesehen. Der Vorteil dieser Ausführungsvariante liegt insbesondere darin, dass die Brillenfassung jederzeit durch den Austausch von Vorderseiten an die Bedürfnisse des Benutzers angepasst werden kann.

An dieser Stelle soll festgehalten werden, dass sich die vorliegende Erfindung neben der erfindungsgemässen Brillenfassung auch auf ein entsprechendes Verfahren zur Herstellung und Montage einer entsprechenden Brillenfassung bezieht.

Nachfolgend werden die Ausführungsvarianten der vorliegenden Erfindung anhand von Beispielen beschrieben. Die Beispiele der Ausführungen werden durch folgende beigelegte Figuren illustriert:
Figur 1 zeigt eine perspektivische schematische Darstellung einer personalisierbaren, modularen Brillenfassung gemäss einer Ausführungsvariante der vorliegenden Erfindung.
Figur 2 zeigt eine perspektivische Explosionsansicht der personalisierbaren, modularen Brillenfassung gemäss einer Ausführungsvariante der vorliegenden Erfindung aus Figur 1.
Figur 3A zeigt einen vergrösserten Ausschnitt aus der perspektivischen Explosionsansicht der personalisierbaren, modularen Brillenfassung gemäss einer Ausführungsvariante der vorliegenden Erfindung aus Figur 2.
Figur 3B zeigt schematisch einen Querschnitt durch die personalisierbare, modulare Brillenfassung gemäss einer Ausführungsvariante der vorliegenden Erfindung entlang der Linie B-B aus Figur 5A.
Figur 4 zeigt schematisch eine detaillierte Seitenansicht eines Teils der personalisierbaren, modularen Brillenfassung gemäss einer Ausführungsvariante der vorliegenden Erfindung.
Figur 5A zeigt schematisch eine Frontalansicht der personalisierbaren, modularen Brillenfassung gemäss einer Ausführungsvariante der vorliegenden Erfindung.
Figur 5B zeigt schematisch einen Querschnitt entlang der Linie A-A durch die personalisierbare, modulare Brillenfassung gemäss einer Ausführungsvariante der vorliegenden Erfindung aus Figur 5A.

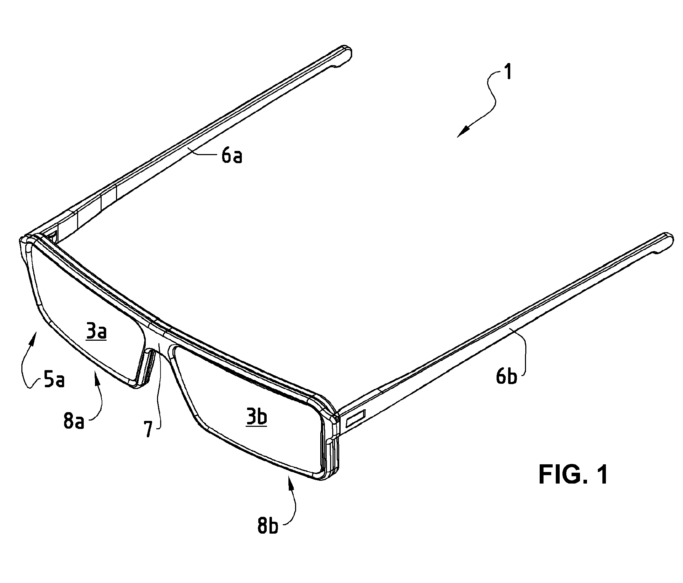

Figur 1 zeigt eine personalisierbare, modulare Brillenfassung 1 gemäss einer ersten Ausführungsvariante der vorliegenden Erfindung. Die Brillenfassung 1 in Figur 1 umfasst einerseits einen Rahmen, welcher grundsätzlich aus zwei symmetrischen Hälften 8a, 8b besteht (in diesem Dokument werden die Elemente, welche grundsätzlich die gleiche Form aufweisen, aber symmetrisch zum entsprechenden anderen Element ausgebildet sind, durch dieselben Bezugszeichen mit den jeweiligen Indizes a und b gekennzeichnet). Diese beiden Hälften 8a, 8b sind durch eine Mittelbrücke 7 verbunden. Diese Mittelbrücke 7 hat eine Form, welche das bequeme Tragen der Brillenfassung 1 in Zusammenarbeit mit dem Nasensteg auf der Innerseite der symmetrischen Hälften 8a, 8b (nicht dargestellt) auf der Nase des Benutzers ermöglicht. Jede dieser Rahmenhälften 8a, 8b trägt jeweils ein Brillenglas 3a, 3b. Diese Brillengläser 3a, 3b können insbesondere Korrekturgläser sein, welche zur Verbesserung des Sehvermögens des Benutzers verwendet werden, aber auch verdunkelte oder farbige Gläser ohne Korrektur, welche aus Mode- oder sonstigen Gründen getragen werden.

An jeder der beiden Rahmenhälften 8a, 8b der Brillenfassung 1 ist jeweils ein Bügel 6a, 6b befestigt. Zum Tragen der Brille werden die Bügel 6a, 6b jeweils auf den Ohren des Benutzers abgestützt, so dass sich die ganze Brillenfassung 1 in einem Gleichgewicht befindet. Wenn die Brille nicht getragen wird, können die Bügel 6a, 6b eingeklappt werden, um Platz zu sparen und ein einfacheres Handhaben zu ermöglichen. Dazu befinden sich an den Verbindungsstellen zwischen den Rahmenhälften 8a, 8b und den Bügeln 6a, 6b jeweils Scharniere oder andere ähnliche Bewegungsanordnungen (nicht dargestellt). Auch können diese Scharniere insbesondere so ausgebildet sein, dass die Bügel 6a, 6b nach Bedarf abnehmbar und/oder austauschbar sind.

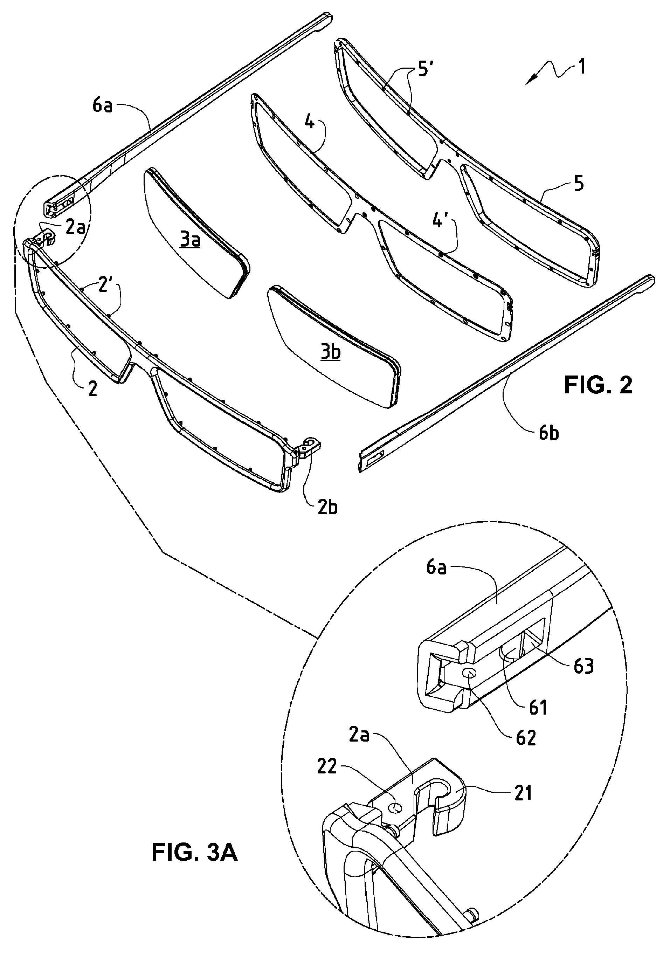

In Figur 2 ist die personalisierbare, modulare Brillenfassung 1 gemäss einer ersten Ausführungsvariante der vorliegenden Erfindung aus Figur 1 in einer Explosionsansicht dargestellt. In dieser Explosionsansicht wird insbesondere ersichtlich, dass die beiden Rahmenhälften 8a, 8b grundsätzlich aus verschiedenen Schichten 2, 4, 5 zusammengesetzt sind. Selbstverständlich können an dieser Stelle aber auch mehr (beispielsweise vier), aber auch weniger (beispielsweise zwei) als drei Schichten 2, 4, 5 verwendet werden, ohne dass vom ursprünglichen Erfindungsgedanken abgewichen wird. Die Vorderschicht 2 und die Hinterschicht 5 können miteinander verbunden werden, so dass insbesondere die Brillengläser 3a, 3b zwischen diesen beiden Schichten festgeklemmt werden. Auf diese Weise können die beiden Brillengläser 3a, 3b sehr einfach, sicher und verlässlich in die Brillenfassung 1 eingesetzt werden.

In Figur 2 wird ausser der Vorderschicht 2 und der Hinterschicht 5 noch eine Zwischenschicht 4 dargestellt, welche zusammen mit diesen beiden Schichten 2, 5 den Zentralteil der Brillenfassung 1 bildet. Die Zwischenschicht 4 kann insbesondere viel dünner sein als die Vorderschicht 2 und/oder die Hinterschicht 5 (wie dargestellt). In diesem Fall können die Brillengläser 3a, 3b so ausgebildet sein, dass sie eine Rille aufweisen, in welche die Zwischenschicht 4 eingepasst wird. Dabei werden die Brillengläser 3a, 3b selbstverständlich so abgemessen, dass deren äusserer Rand etwas grösser ist als die Öffnungen in der Zwischenschicht 4, wobei eine sitzfeste Einpassung der Brillengläser 3a, 3b ermöglicht wird. Allerdings kann diese Zwischenschicht 4 auch gleich dick wie die beiden Schichten 2, 5, oder gar noch dicker sein. In diesem Fall weisen die Brillengläser 3a, 3b beispielsweise einen spitzen Rand auf, welcher in die entsprechende Nute der Zwischenschicht 4 eingepasst wird. In diesen beiden Fällen können die Öffnungen der Zwischenschicht 4 zur Aufnahme der Brillengläser 3a, 3b genau mit der Form bzw. der Grösse der Brillengläser 3a, 3b abgestimmt werden, so dass diese Brillengläser 3a, 3b ohne zusätzliche Hilfsmittel in der Zwischenschicht 4 untergebracht und fixiert werden können. Allerdings ist auch eine Lösung vorstellbar, in welcher die Brillengläser 3a, 3b mittels eines geeigneten Haftmittels, oder sogar mittels einer Art Dichtung (welche unter Umständen auch eine andere Farbe oder Textur als die Zwischenschicht 4 haben kann) in den Öffnungen der Zwischenschicht 4 fixiert werden können.

Die Brillengläser 3a, 3b können insbesondere durch eine Fachperson in die Zwischenschicht 4 eingepasst werden. Dabei wird den spezifischen Bedürfnissen der einzelnen Benutzer im Bezug auf die Brillengläser fachlich kompetent Rechnung getragen. Beispielsweise können auf diese Weise insbesondere die von den Augenärzten, Optikern oder anderen Fachpersonen vorgeschriebenen Korrekturparameter (Glasstärke, Gekrümmtheit etc.) genau eingehalten werden. Nach der Einpassung der Brillengläser 3a, 3b in die Zwischenschicht 4 kann diese (wie weiter unten beschrieben ist) in die Brillenfassung 1 integriert werden. Beim anschliessenden Personalisieren der Brillenfassung 1 durch den Benutzer oder eine andere nicht fachlich ausgebildete Person können die Zwischenschicht 4 und die darin integrierten Brillengläser 3a, 3b direkt übernommen werden, ohne dass irgendwelche Anpassungen notwendig sind. Dadurch kann stets gewährleistet werden, dass die Stärke, die Gekrümmtheit und die Ausrichtung der Brillengläser immer den vorgeschriebenen Werten entsprechen.

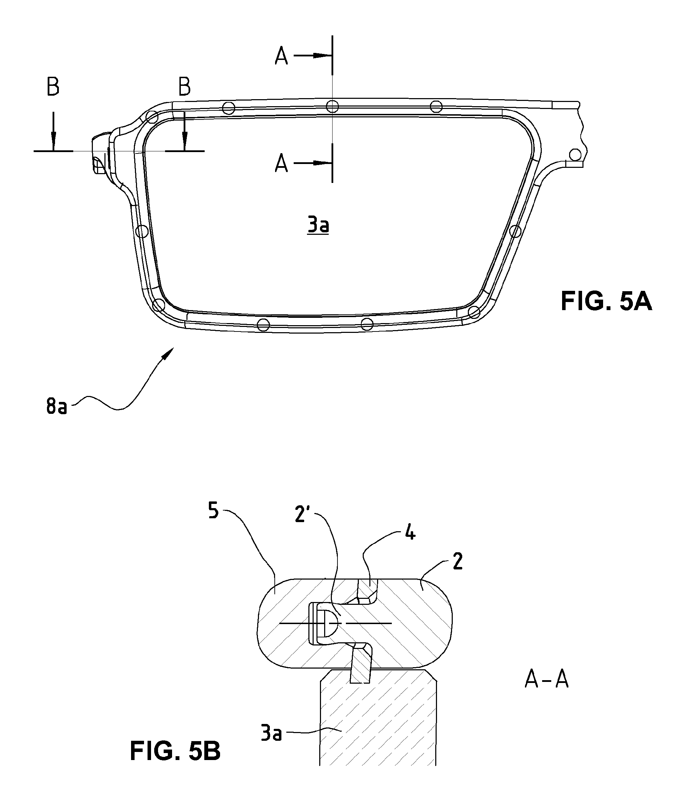

Die Vorderschicht 2, die Zwischenschicht 4 und die Hinterschicht 5 weisen jeweils eine Reihe von Befestigungselementen 2', 4', 5' auf, welche zusammenwirken können, um eine feste Verbindung zwischen diesen Schichten erreichen zu können. Insbesondere können die Befestigungselemente 2' der Vorderschicht 2 als Noppen ausgebildet werden, während die Befestigungsmittel 4' und 5' der Zwischenschicht 4, respektive der Hinterschicht 5, die Form einer mit der Noppe 2' komplementären Öffnung aufweisen können. Es sind aber selbstverständlich auch viele andere Formen und Arten von Befestigungselementen 2', 4', 5' denkbar, durch welche die gleiche Funktionalität mit sehr ähnlichen Mitteln realisiert werden kann. Eine etwas genauere Beschreibung des Aufbaus einer möglichen Kombination der Befestigungselemente 2', 4', 5' wird in Figur 5B dargestellt. Durch die Befestigungselemente 2', 4', 5' wird ein guter Zusammenhalt aller Schichten 2, 4, 5, und damit auch eine gute Befestigung der Brillengläser 3a, 3b in der Brillenfassung gewährleistet.

Die Vorderschicht 2 in Figur 2 umfasst ausserdem die Klemmanordnungen 2a, 2b. Selbstverständlich ist aber auch eine Lösung denkbar, in welcher die Vorderschicht 2 nur eine, oder aber mehr als zwei solcher Klemmanordnungen aufweist. Zudem ist auch eine andere Lösung denkbar, in welcher diese Klemmanordnungen 2a, 2b nicht an der Vorderschicht 2, sondern an der Hinterschicht 5 oder auch einer anderen Schicht angebracht sind. Eine grössere Ansicht der Klemmanordnung 2a wird in Figur 3A dargestellt.

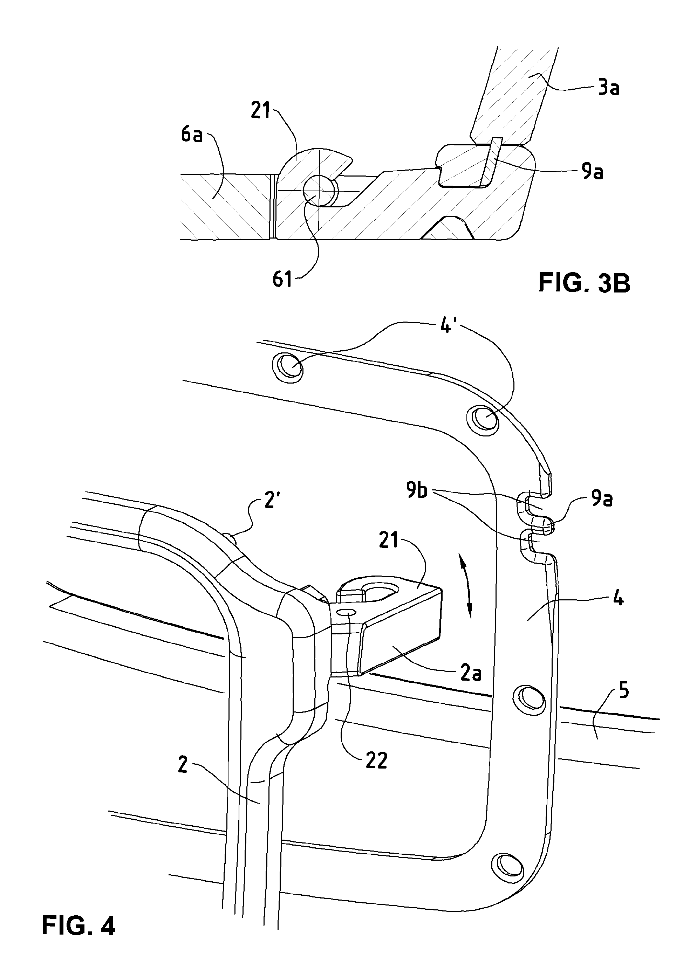

In Figur 3A umfasst die Klemmanordnung 2a den Vorderteil 21 in der Form eines Hakens. Die Klemmanordnung 2a ist so dimensioniert, dass sie mit der entsprechenden Befestigungsanordnung 63 des Bügels 6a zusammenwirkt, um den Bügel 6a sicher an der Vorderschicht 2 des Zentralteils der Brillenfassung 1 zu befestigen. Insbesondere kann der Haken 21 dabei mit dem Stift 61 des Bügels 6a verbunden werden, so dass ein solider Eingriff zwischen den beiden Elementen hergestellt werden kann. Zur Verstärkung dieser Verbindung sind ausserdem zwei Profilelemente 22 (an der Klemmanordnung 2a der Vorderschicht 2) und 62 (am Bügel 6a) vorgesehen, welche sich beim Tragen der Brille 1 direkt übereinander befinden und eine seitliche Bewegung durch das gegenseitige Einrasten verhindern. Natürlich sind aber auch Lösungen vorstellbar, welche dieses Problem auf eine andere Art und Weise bewältigen. In Figur 3B ist in einer Querschnittansicht die Position der einzelnen beschriebenen Elemente dargestellt, nachdem die Klemmanordnung 2a mit dem Bügel 6a verbunden worden ist. Es kann klar gesehen werden, wie der Haken 21 mit dem Stift 61 des Bügels 6a zusammenwirkt, um eine gute Verbindung zwischen dem Zentralteil der Brillenfassung 1 und dem Bügel 6a zu gewährleisten. In dieser Figur wird auch das Brillenglas 3a dargestellt, welches mittels des ersichtlichen Stützelements 9a durch die Klemmanordnung 2a festgehalten wird. Diese andere Funktionalität der Klemmanordnung 2a wird nachfolgend erläutert.

Ausser der Verbindungsfunktion zwischen dem Zentralteil der Brillenfassung 1 und den Bügeln 6a, 6b haben die Klemmanordnungen 2a, 2b insbesondere auch die Aufgabe, die einzelnen Schichten 2, 4, 5 so miteinander zusammenzuklemmen, dass eine starke Verbindung zwischen den einzelnen Schichten 2, 4, 5 entsteht, und dass auch die Brillengläser 3a, 3b optimal an ihrer Position gehalten werden. Figur 4 zeigt eine detaillierte Seitenansicht eines Teils der personalisierbaren, modularen Brillenfassung 1 gemäss einer Ausführungsvariante der vorliegenden Erfindung, in welcher insbesondere die Klemmanordnung 2a etwas genauer dargestellt ist. In Figur 4 tragen die Elemente, die bereits in den vorhergehenden Figuren erläutert worden sind, dieselben Bezugszeichen. So werden in Figur 4 die Vorderschicht 2 mit dem dazugehörenden Befestigungselement 2', die Zwischenschicht 4 mit den dazugehörenden Befestigungselementen 4', sowie die Hinterschicht 5 dargestellt. Ausserdem wird an der Vorderschicht 2 auch die Klemmanordnung 2a mit ihrem Haken 21 und dem Profilelement 22 dargestellt.

An der Zwischenschicht 4 werden in Figur 4 Stützelemente 9a, 9b gezeigt. Das Stützelement 9a hat dabei die Form eines kleinen Stifts, während die Stützelemente 9b die Form von zwei kleinen Einschnitten (bzw. Kerben oder Rillen) aufweisen. Es muss erwähnt werden, dass diese Stützelemente 9a, 9b selbstverständlich aber auch andere Formen haben können, ohne dass dadurch der Erfindungsgedanke beeinträchtigt wäre. Entsprechende Stützelemente sind auch in der Hinterschicht 5 vorhanden, wobei deren Form und Grösse insbesondere denen aus der Zwischenschicht 4 entsprechen können. Es ist aber selbstverständlich möglich, dass diese Stützelemente im Bezug auf die Form bzw. die Grösse auch anders ausgestaltet sind. Die Stützelemente der Hinterschicht 5, aber auch die Stützelemente 9a, 9b der Zwischenschicht 4 sind insbesondere so ausgebildet, dass sie im stabilen Zustand (d.h. zurzeit, wenn auf die Brillenfassung 1 und insbesondere auf die Klemmanordnungen 2a, 2b keine direkte äussere Kraft einwirkt) derart ineinander greifen, dass die Vorderschicht 2 und die Hinterschicht 5 miteinander fest verbunden, und die in der Zwischenschicht 4 befestigten Brillengläser 3a, 3b zwischen der Vorderschicht 2 und der Hinterschicht 5 festgeklemmt sind. Dieses Ineinandergreifen kann beispielsweise, wie oben beschrieben, schematisch in Figur 3B gesehen werden. Dabei spielen die Stützelemente 9a, 9b der Zwischenschicht 4 neben der Befestigungsrolle insbesondere auch eine Zentrierungsrolle, so dass die Zwischenschicht 4 mit den Brillengläsern 3a, 3b auf optimale Weise in der Brillenfassung 1 zentriert bleibt.

Die Klemmanordnung 2a, 2b kann vorteilhaft aus einem elastischen Material hergestellt werden. Dieses elastische Material muss insbesondere die Eigenschaft aufweisen, dass die Klemmanordnung 2a, 2b im stabilen Zustand (ohne äussere Krafteinwirkung) dank des Zusammenwirkens mit den Stützelementen 9a, 9b der Zwischenschicht 4 und/oder den Stützelementen der Hinterschicht 5 (sowie aller anderen möglichen Schichten) alle Schichten 2, 4, 5 stabil festhält. Vor allem muss dieses Festklemmen genügend stark sein, dass die Brillenfassung 1 den üblichen Belastungen beim Tragen standhalten kann, ohne dass die einzelnen Schichten 2, 4, 5 voneinander getrennt werden, was zu einem Herausfallen und Beschädigen oder gar Zerstören von Brillengläsern 3a, 3b führen könnte. Auf der anderen Seite muss das elastische Material der Klemmanordnung 2a, 2b aber dennoch so flexibel sein, um bei einer Krafteinwirkung auf die Klemmanordnung 2a, 2b (dargestellt durch den doppelseitigen Pfeil in Figur 4) die Verbindung mit den Stützelementen 9a, 9b der Zwischenschicht 4 und den Stützelementen der Hinterschicht 5, und damit auch die Verbindung unter den einzelnen Schichten 2, 4, 5, automatisch und ohne Bedarf an zusätzlichen Mitteln (beispielsweise Werkzeuge wie Schraubenzieher oder der so genannte Inbus- bzw Innensechskantschlüssel) oder Massnahmen aufzulösen.

In Figur 5A wird eine Frontalansicht der personalisierbaren, modularen Brillenfassung gemäss einer Ausführungsvariante der vorliegenden Erfindung gezeigt. Es können die einzelnen Befestigungselemente 2', 4', 5' erkannt werden, durch welche die Verbindung zwischen den einzelnen Schichten 2, 4, 5 verstärkt wird. Es sind in Figur 5a ausserdem die Querschnittsorte entlang den Linien A-A und B-B angezeigt, welche jeweils in den Figuren 5B und 3B dargestellt sind.

Die Vorteile der erfindungsgemässen personalisierbaren, modularen Brillenfassung 1 liegen insbesondere darin, dass diese Brillenfassung 1 einerseits aus verschiedenen Teilen 2, 3a, 3b, 4, 5, 6a, 6b äusserst einfach montiert werden kann. Zudem besteht die Möglichkeit, die einzelnen Teile nach Belieben miteinander zu kombinieren. Dies ist insbesondere vorteilhaft, wenn eine kostengünstige Herstellung solcher Brillenfassungen erreicht werden kann. So können in diesem Fall lediglich die Vorderschichten 2 in verschiedenen Ausführungen hergestellt werden, während die anderen Elemente (z.B. die Zwischenschicht 4, die Hinterschicht 5, die Bügel 6a und 6b) jeweils standardisiert und stets gleich gebaut werden können. So reicht für eine Personalisierung der Brillenfassung 1 der Einsatz der entsprechenden Vorderschicht 2, welche beispielsweise verschiedene Farben, Muster, Materialien, Grössen, etc. aufweisen kann. Somit kann insbesondere der Stock einzelner Elemente in den Optikerläden massiv reduziert werden, da lediglich von der Vorderschicht 2 verschiedene Ausführungsformen gelagert werden müssen. Nicht zuletzt kann eine solche Brillenfassung 1 beim Verkauf mit verschiedenen Vorderschichten 2 geliefert werden. Dank der sehr einfachen Auflösung des Klemmeingriffs zwischen den einzelnen Schichten 2, 4, 5 und auch einer sehr einfachen Montage der Bügel 6a, 6b kann die Anpassung bzw. die Personalisierung der Brillenfassung 1 vollkommen autonom (d.h. ohne einen Spezialisten) durchgeführt werden. So kann auch den aktuellen Modetrends entsprochen werden, oder die Brillen können optimal in Einklang mit den Kleidungsstücken gebracht werden.

Die Erfindung ist nicht auf die beschriebenen Ausführungsformen beschränkt. Dem Fachmann wird ohne weiteres klar sein, dass Weiterentwicklungen und Abänderungen im Rahmen der geschützten Erfindung möglich sind. Elemente der erfindungsgemässen Brillenfassung können je nach Bedarf durch andere Elemente ausgetauscht werden, die die gleichen oder ähnlichen Funktionen erfüllen. Zusätzliche Einrichtungen und Elemente, wie beispielsweise Verschlüsse an der Klemmanordnung, durch welche eine unwillentliche Lösung des Klemmeingriffs verhindert werden kann, können ebenfalls vorgesehen werden. Diese und andere Massnahmen und Elemente fallen aber in den Schutzbereich der Erfindung, der durch die Patentansprüche definiert wird.

## Patentansprüche

1. Personalisierbare, modulare Brillenfassung (1), umfassend mindestens eine Vorderschicht (2) und eine Hinterschicht (5), zwischen welchen Brillengläser (3a, 3b) platzierbar sind, sowie zwei an der Vorderschicht (2) lösbar befestigte Bügel (6a, 6b),
**dadurch gekennzeichnet,**
**dass** an der Vorderschicht (2) mindestens eine Klemmanordnung (2a, 2b) und an der Hinterschicht (5) mindestens ein entsprechendes Stützelement (9a, 9b) vorgesehen sind, welche im stabilen Zustand derart ineinander greifen, dass die Vorderschicht (2) und die Hinterschicht (5) miteinander verbindbar und die Brillengläser (3a, 3b) zwischen der Vorderschicht (2) und der Hinterschicht (5) festklemmbar sind.

2. Personalisierbare, modulare Brillenfassung (1) gemäss Anspruch 1, **dadurch gekennzeichnet, dass** die Vorderschicht mindestens ein erstes Befestigungselement (2') und die Hinterschicht (5) mindestens ein zweites komplementäres Befestigungselement (5') derart umfassen, dass die Verbindung zwischen der Vorderschicht (2) und der Hinterschicht (5) im stabilen Zustand verstärkbar ist.

3. Personalisierbare, modulare Brillenfassung (1) gemäss Anspruch 2, **dadurch gekennzeichnet, dass** das mindestens eine erste Befestigungselement (2') die Form einer Noppe, und das mindestens eine zweite Befestigungselement (5') die Form einer mit der Noppe komplementären Öffnung aufweist.

4. Personalisierbare, modulare Brillenfassung (1) gemäss einem der Ansprüche 1 bis 3, **dadurch gekennzeichnet, dass** mindestens eine Zwischenschicht (4) mit Öffnungen zur Aufnahme von den Brillengläsern (3a, 3b) vorgesehen ist, welche mindestens ein drittes Befestigungselement (4') derart umfasst, dass die Zwischenschicht (4) im stabilen Zustand zwischen der Vorderschicht (2) und der Hinterschicht (5) festklemmbar und mit der Vorderschicht (2) und der Hinterschicht verbindbar ist.

5. Personalisierbare, modulare Brillenfassung (1) gemäss einem der Ansprüche 1 bis 4, **dadurch gekennzeichnet, dass** die mindestens eine Klemmanordnung (2a, 2b) derart aus einem elastischen Material hergestellt ist, dass das Festklemmen der Brillengläser (3a, 3b) durch die Kraftanwendung auf die mindestens eine Klemmanordnung (2a, 2b) lösbar ist.

6. Personalisierbare, modulare Brillenfassung (1) gemäss einem der Ansprüche 1 bis 5, **dadurch gekennzeichnet, dass** mindestens die Vorderschicht (2) aus Kunststoff hergestellt ist.

7. Personalisierbare, modulare Brillenfassung (1) gemäss einem der Ansprüche 1 bis 6, **dadurch gekennzeichnet, dass** mindestens zwei verschiedene, austauschbare Vorderschichten (2) vorgesehen sind.
